# NEUE EUROPÄISCHE PATENTSCHRIFT

(11) **EP 1 662 173 B2**
(45) Veröffentlichungstag und Bekanntmachung des Hinweises auf die Entscheidung über den Einspruch: **26.10.2011**
(45) Hinweis auf die Patenterteilung: 15.08.2007
(21) Anmeldenummer: 05023821.1
(22) Anmeldetag: 02.11.2005
(51) Int. Cl.: F16F 15/134

(54) **Drehschwingungsdämpfer**
Torsional vibration damper
Amortisseur d'oscillations de torsion

(30) Priorität: 30.11.2004 DE 102004057949
(43) Veröffentlichungstag der Anmeldung: 31.05.2006
(73) Patentinhaber: Schaeffler Technologies GmbH & Co. KG, 91074 Herzogenaurach (DE)
(72) Erfinder: Zhou, Bin, 77815 Bühl (DE); Jäckel, Johann, 77830 Bühlertal (DE); Kooy, Ad, Dr., 77886 Lauf (DE)

(56) Entgegenhaltungen:
- EP-A- 0 994 272
- EP-A1- 1 598 574
- EP-A1- 1 598 575
- DE-A1- 4 341 373
- DE-A1- 10 209 838
- DE-A1- 10 241 879
- US-A- 5 092 820

## Beschreibung

Die Erfindung betrifft Drehschwingungsdämpfer, insbesondere für Kraftfahrzeuge, die wenigstens zwei um eine Drehachse verdrehbare Teile besitzen, welche relativ zueinander entgegen der Wirkung wenigstens einer Schraubenfeder drehbeweglich sind, wobei die Schraubenfeder in einer bogenförmig verlaufenden Aufnahme bzw. Kammer geführt ist, die von Bereichen wenigstens eines der beiden Teile gebildet ist, wobei diese Aufnahme bzw. Kammer durch wenigstens einen Wandungsbereich begrenzt wird, welcher zumindest radial äußere Bereiche der Schraubenfeder axial übergreift und sich zumindest über die Länge der Schraubenfeder in Umfangsrichtung des Drehschwingungsdämpfers erstreckt. Die Schraubenfeder ist dabei wenigstens radial nach außen hin über zumindest einen Gleitschuh abstützbar, welcher entlang des Wandungsbereiches bewegbar ist, wobei wenigstens eine Windung der Schraubenfeder vom Gleitschuh zumindest radial abgestützt wird.

Derartige Drehschwingungsdämpfer in Form von so genannten Zweimassenschwungrädern sind beispielsweise durch die DE 102 09 838 A1, die DE 43 41 373 A1 und die EP 0994272 A2 vorgeschlagen worden.

Der vorliegenden Erfindung lag die Aufgabe zugrunde, Drehschwingungsdämpfer der vorerwähnten Art bezüglich deren Dämpfungseigenschaften zu optimieren, insbesondere soll durch die erfindungsgemäßen Ausgestaltungsmerkmale gewährleistet werden, dass wenigstens bei geringeren Drehzahlen, zum Beispiel unterhalb von 2000 U/min, der Gleit- bzw. Verschiebewiderstand zwischen einem Gleitschuh und der diesen radial abstützenden Fläche einer Wandung gegenüber den bekannten Ausführungsformen verringert werden kann.

Gemäß der Erfindung wird dies bei einem Drehschwingungsdämpfer der eingangs beschriebenen Art durch die Merkmale des Anspruches 1 erzielt. Durch die erfindungsgemäße Maßnahme wird gewährleistet, dass bei geringeren Drehzahlen die in Eingriff stehenden Abstützflächen bzw. Gleitflächen verhältnismäßig klein sind, so dass insbesondere bei Verwendung von Schmiermittel der Scher- bzw. Haftwiderstand zwischen einem Gleitschuh und der mit diesem zusammen wirkenden Abstütz- bzw. Gleitfläche verringert werden kann. Durch die Verringerung der in Eingriff stehenden Flächen wird auch eine Erhöhung der spezifischen Flächenpressung erzielt, die ebenfalls dazu beiträgt, den Verschiebewiderstand zwischen dem Gleitschuh und der diesen abstützenden Fläche zu reduzieren. Durch die Vergrößerung der zusammen wirkenden Abstütz- bzw. Gleitflächen wird andererseits bei höheren Drehzahlen gewährleistet, dass die Flächenpressung auf einem akzeptablen Maß verbleibt.

Durch entsprechende konstruktive Ausgestaltung eines Gleitschuhes kann erzielt werden, dass die Veränderung der Abstützfläche des Gleitschuhes mit zunehmender Drehzahl zumindest stufenweise erfolgt.

Eine stufenweise Veränderung der Gleitschuhabstützfläche kann beispielsweise dadurch erzielt werden, dass der Gleitschuh mehrteilig aufgebaut ist, wobei zwischen wenigstens zwei Teilen zumindest ein Federelement vorhanden ist, entgegen dessen Wirkung eine Relativbewegung dieser Teile - zumindest unter Fliehkrafteinwirkung - ermöglicht ist. Die gegenüber dem eigentlichen Gleitschuh bewegbaren Teile bilden dabei Gleitflächenbereiche. In vorteilhafter Weise können Bereiche der Abstützfläche des Gleitschuhes Ausnehmungen aufweisen, in denen Abstützelemente aufgenommen sind, welche Gleitflächenbereiche bilden und vorzugsweise entgegen der Wirkung eines Federelementes in die Ausnehmungen drängbar sind. Durch das Eintauchen derartiger Abstützelemente in den eigentlichen Gleitschuh wird gewährleistet, dass oberhalb einer bestimmten Drehzahl die vom Gleitschuh radial fest getragenen Gleitflächenanteile zum Einsatz kommen. Im nicht beanspruchten Zustand ragen die Abstützelemente gegenüber der eigentlichen Abstützfläche des Gleitschuhes radial hervor. In vorteilhafter Weise können derartige Abstützelemente am Gleitschuh verliergesichert sein, zum Beispiel mittels eines Formschlusses. Ein derartiger Formschluss kann in vorteilhafter Weise als Schnappverbindung ausgebildet sein, wodurch auch die Montage des Gesamtgleitschuhes erleichtert wird.

Erfindungsgemäß sind die die Abstützfläche eines Gleitschuhes bildenden Bereiche derart ausgestaltet, dass sie bei Nichtbeanspruchung des Gleitschuhes einen vom Krümmungsverlauf des den Gleitschuh radial abstützenden Wandungsbereiches abweichenden Krümmungsverlauf besitzen. Unter Fliehkrafteinwirkung werden dann diese Bereiche bzw. die Abstützfläche federnd verformt, so dass eine Anpassung an den Krümmungsverlauf des Wandungsbereiches stattfindet. Die Abstützfläche des Gleitschuhes bzw. die diese Abstützfläche bildenden Bereiche weisen dabei einen größeren Krümmungsradius als der Wandbereich auf. Es wird also der Gleitschuh durch die auf die entsprechende Feder einwirkende Fliehkraft derart verformt, dass sich der Krümmungsradius der Abstützfläche des Gleitschuhes an den Krümmungsradius des Wandungsbereiches bzw. die durch diesen Wandungsbereich gebildete Gleitfläche zumindest annähert.

In vorteilhafter Weise können die von einem Gleitschuh getragenen Abstützelemente aus einem Werkstoff bestehen, der einen geringeren Reibungskoeffizienten aufweist als der den Grundkörper des Gleitschuhes bildenden Werkstoff. Durch eine derartige Ausgestaltung kann auch gewährleistet werden, dass bei höheren Drehzahlen bereits aufgrund des zur Wirkung kommenden, höheren Reibungskoeffizienten eine größere Reibungsdämpfung erzeugt wird. Die im Grundkörper eines Gleitschuhes aufgenommenen Abstützelemente können in vorteilhafter Weise einen Selbstschmiereffekt aufweisen. So können beispielsweise derartige Abstützelemente PTFE oder Blei oder Kupfer oder Kohlestoff oder eine Mischung aus diesen Werkstoffen beinhalten. Entsprechende Werkstoffe sind beispielsweise aus der Gleitlagertechnologie bekannt.

In vorteilhafter Weise kann der Gleitschuh derart ausgebildet sein, dass er einen Bereich aufweist, der wenigstens einen radial äußeren Abschnitt einer Schraubenfederwindung zumindest teilweise umgreift. Durch eine derartige Ausgestaltung kann gewährleistet werden, dass der Gleitschuh - zumindest in Längsrichtung der Schraubenfeder - gegenüber der umgriffenen Federwindung festgelegt ist. In vorteilhafter Weise kann der Gleitschuh weiterhin derart ausgestaltet werden, dass beim Aufsetzen auf die entsprechende Schraubenfederwindung eine Verbindung entsteht, die auch eine Halterung des Gleitschuhes gegenüber der Schraubenfeder in eine Richtung senkrecht zur Längsachse der Schraubenfeder bewirkt.

Gemäß einer Weiterbildung der Erfindung kann im Grundkörper eines Gleitschuhes ein Federelement, das beispielsweise plattenförmig ausgebildet sein kann, eingebettet werden, welches den Krümmungsradius der Abstützfläche des nicht fliehkraftmäßig beanspruchten Gleitschuhes bestimmt.

Die Abstützfläche eines Gleitschuhes kann auch durch eine auf den Grundkörper des Schuhes aufgebrachte Beschichtung mit kleinem Reibungskoeffizienten gebildet sein.

Weitere Vorteile, konstruktive Merkmale und funktionelle Eigenschaften von gemäß der Erfindung ausgebildeten Drehschwingungsdämpfern ergeben sich aus der nachfolgenden Beschreibung, in der, unter Bezugnahme auf Zeichnungen, verschiedene Ausführungsbeispiele beschrieben sind.

### Es zeigen:

- Figur 1: einen Schnitt durch eine Dämpfungseinrichtung, bei der die erfindungsgemäßen Lösungen eingesetzt werden können,
- Figur 2: die Anordnung einer Schraubenfeder, die bei einer Dämpfungseinrichtung gemäß Figur 1 Verwendung finden kann,
- Figur 3: die in Figur 2 dargestellte Anordnung einer Schraubenfeder im komprimierten Zustand,
- Figuren 4 bis 6: eine Ausgestaltungsmöglichkeit eines Gleitschuhes, der in Verbindung mit einer Anordnung gemäß den Figuren 1 bis 3 Verwendung finden kann,
- Figuren 7 bis 9: eine weitere Ausgestaltungsmöglichkeit eines Gleitschuhes für eine Schraubenfeder und
- Figuren 10 und 11: eine zusätzliche Ausführungsform eines Gleitschuhes.

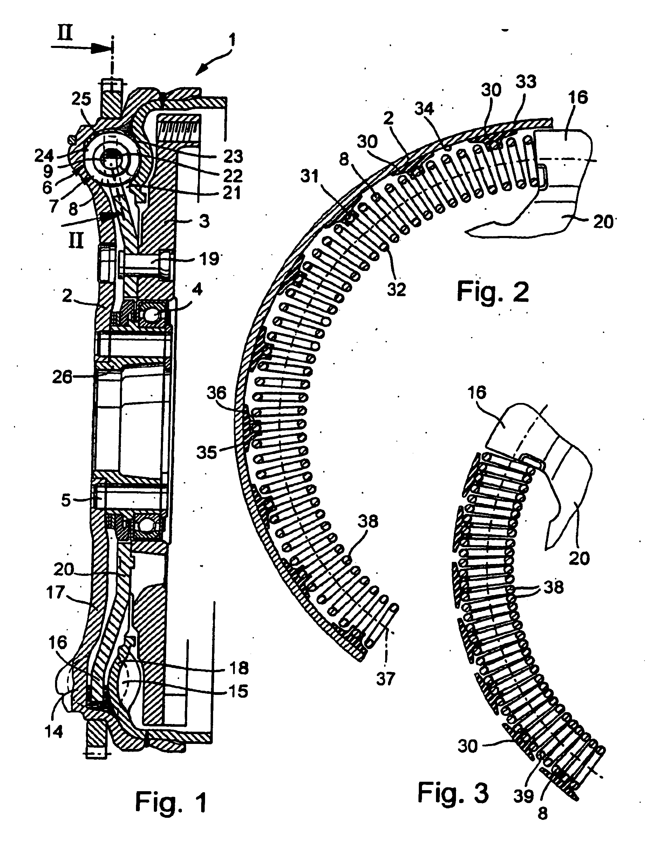

Der in Figur 1 im Schnitt dargestellte Drehschwingungsdämpfer bildet ein geteiltes Schwungrad 1, das eine an einer nicht gezeigten Abtriebswelle einer Brennkraftmaschine befestigbare erste oder Primärschwungmasse 2 sowie eine zweite oder Sekundärschwungmasse 3 aufweist. Auf der zweiten Schwungmasse 3 ist eine Reibungskupplung unter Zwischenlegung einer Kupplungsscheibe befestigbar, über die eine ebenfalls nicht dargestellte Eingangswelle eines Getriebes zu- und abkuppelbar ist. Die Schwungmassen 2 und 3 sind über eine Lagerung 4 zueinander verdrehbar gelagert, die bei dem dargestellten Ausführungsbeispiel radial außerhalb von Bohrungen 5 zur Durchführung von Befestigungsschrauben für die Montage der ersten Schwungmasse 2 an der Abtriebswelle einer Brennkraftmaschine angeordnet ist. Zwischen den beiden Schwungmassen 2 und 3 ist eine Dämpfungseinrichtung 6 wirksam, die Energiespeicher 7 umfasst, von denen zumindest einer durch Schraubendruckfedern 8, 9 gebildet ist. Die Schraubendruckfeder 9 ist zumindest teilweise in dem durch die Windungen der Feder 8 gebildeten Raum aufgenommen oder mit anderen Worten die beiden Schraubenfedern 8 und 9 sind über ihre Längserstreckung betrachtet ineinander geschachtelt. Zweckmäßig kann es sein, wenn die Feder 9 - in Umfangsrichtung des Drehschwingungsdämpfers betrachtet - gegenüber der äußeren Feder 8 kürzer ist, zum Beispiel in der Größenordnung von 15 bis 60 Winkelgrad, vorzugsweise im Bereich von 30 bis 50 Winkelgrad. Die Differenzlänge beziehungsweise der Differenzwinkel kann jedoch auch größer oder kleiner sein.

Die beiden Schwungmassen 2 und 3 besitzen Beaufschlagungsbereiche 14,15 beziehungsweise 16 für die Energiespeicher 7. Bei dem dargestellten Ausführungsbeispiel sind die Beaufschlagungsbereiche 14,15 durch in die die erste Schwungmasse 2 bildenden Blechteile 17,18 eingebrachte Anprägungen gebildet. Die axial zwischen den Beaufschlagungsbereichen 14,15 vorgesehenen Beaufschlagungsbereiche 16 sind durch zumindest ein mit der Sekundärschwungmasse 3, beispielsweise über Niete 19, verbundenes flanschartiges Beaufschlagungsbauteil 20 gebildet. Dieses Bauteil 20 dient als Drehmomentübertragungselement zwischen den Energiespeichern 7 und der Schwungmasse 3. Die Beaufschlagungsbereiche 16 sind durch am Außenumfang des flanschartigen Beaufschlagungsmittels 20 vorgesehene radiale Arme beziehungsweise Ausleger 16 gebildet. Das durch Kaltumformung von Blechmaterial hergestellte Bauteil 17 dient zur Befestigung der ersten Schwungmasse 2 beziehungsweise des gesamten geteilten Schwungrades 1 an der Abtriebswelle einer Brennkraftmaschine. Radial außen ist das Bauteil 17 mit dem ebenfalls aus Blech hergestellten Bauteil 18 verbunden. Die beiden Bauteile 17 und 18 bilden einen ringförmigen Raum 21, der hier einen torusartigen Bereich 22 bildet. Der ringförmige Raum 21 beziehungsweise der torusartige Bereich 22 kann zumindest teilweise mit einem viskosen Medium, wie beispielsweise Fett, gefüllt sein. In Umfangsrichtung betrachtet zwischen den Anformungen beziehungsweise den Beaufschlagungsbereichen 14,15 bilden die Bauteile 17,18 Ausbuchtungen 23,24, die den torusartigen Bereich 22 begrenzen und Aufnahmen für die Energiespeicher 7 bilden. Zumindest bei rotierender Einrichtung 1 stützen sich zumindest die Windungen der Federn 8 an den den torusartigen Bereich 22 radial außen begrenzenden Bereichen des Bauteiles 17 und/oder 18 ab. Bei dem in Figur 1 dargestellten Ausführungsbeispiel ist ein durch wenigstens eine gehärtete Blechzwischenlage beziehungsweise Blecheinlage gebildeter Verschleißschutz 25 vorgesehen, an dem sich zumindest die Federn 8 radial abstützen. Der Verschleißschutz 25 erstreckt sich in Umfangsrichtung in vorteilhafter Weise zumindest über die gesamte Länge beziehungsweise Winkelerstreckung der entspannten Energiespeicher 7. Infolge der fliehkraftmäßigen Abstützung der Windungen zumindest der Federn 8 wird zwischen diesen Windungen und den mit diesen in Reibeingriff stehenden Bauteilen eine drehzahlabhängige Reibungsdämpfung bei einer Längenänderung beziehungsweise Kompression der Energiespeicher 7 beziehungsweise der Schraubenfedern 8 erzeugt.

Radial innen trägt das sich radial erstreckende Bauteil 17 ein Zwischenteil beziehungsweise eine Nabe 26, das beziehungsweise die den inneren Lagerring des Kugellagers 4 aufnimmt beziehungsweise trägt. Der äußere Lagerring des Kugellagers 4 trägt die Schwungmasse 3.

Aufgrund der vorerwähnten, zwischen den einzelnen Windungen der länglich ausgebildeten Feder 8 und dem Verschleißschutz 25 auftretenden Reibung wird insbesondere bei hohen Motordrehzahlen nur eine geringe beziehungsweise ungenügende Entspannung des Energiespeichers 7 beziehungsweise der Schraubendruckfedern 8 und/oder 9 auftreten, wodurch die Dämpfungseigenschaften des Drehschwingungsdämpfers vermindert werden. Insbesondere beim Auftreten von Lastwechseln (Zug/Schub) beim Betrieb eines Kraftfahrzeuges können dadurch störende Geräusche entstehen, und zwar weil der Energiespeicher 7 dann als verhältnismäßig harter Anschlag wirkt, weil die Federwindungen des Energiespeichers 7 in einem zumindest teilweise verspannten Zustand infolge der vorerwähnten Reibung verharren und somit eine hohe Federsteifigkeit erzeugen.

Um dies zu vermeiden, beziehungsweise zumindest eine wesentlich größere Entspannung des Energiespeichers beziehungsweise zumindest der Schraubenfeder 8 auch bei höheren Motordrehzahlen zu gewährleisten, kommen, wie unter anderem aus Figur 2 ersichtlich, Gleitschuhe 30 zum Einsatz, die jeweils auf einem radial äußere Abschnitt 31 einer Windung 32 der Schraubendruckfeder 8 aufgesteckt sind. Die Gleitschuhe 30 werden durch die bei Rotation des Drehschwingungsdämpfers 1 auf die Schraubenfeder 8 (und gegebenenfalls 9, gemäß Figur 1) einwirkende Fliehkraft radial nach außen beansprucht und stützen sich an der die Schraubenfeder 8 zumindest radial außen umgebenden Wandung 33 ab. Bei dem in Figur 2 dargestellten Ausführungsbeispiel stützen sich die Gleitschuhe 30 unmittelbar an der Wandung 33 ab. In vorteilhafter Weise kann jedoch zwischen der Wandung 33 und den Gleitschuhen 30 eine Zwischenschicht beziehungsweise Zwischenlage vorgesehen sein, die vorzugsweise eine hohe Verschleißfestigkeit aufweist und/oder gute Gleiteigenschaften besitzt, um den Verdrehwiderstand zwischen den Gleitschuhen 30 und der diese abstützenden Fläche weiter zu minimieren. Um diesen Verdrehwiderstand zu verringern, kann, wie in Zusammenhang mit Figur 1 beschrieben, eine Schmierung vorgesehen werden. Weiterhin kann es besonders vorteilhaft sein, wenn zur Verbesserung des Aufbaues eines Schmierfilmes zumindest eine der in Reibkontakt befindlichen Flächen zumindest eine feine Oberflächenstrukturierung aufweist, die auch das Verbleiben von Schmiermittel, wie insbesondere Fett, zwischen den Reibschuhen 30 und der diese abstützenden Fläche 34 begünstigt. Letzteres kann beispielsweise durch Vorsehen einer gewissen Unebenheit beziehungsweise Rauhigkeit an zumindest einer der miteinander zusammenwirkenden Gleit- beziehungsweise Abstützflächen erzielt werden. In vorteilhafter Weise kann auch wenigstens eine der miteinander zusammenwirkenden Gleit- beziehungsweise Abstützflächen eine Beschichtung aufweisen, wie dies beispielsweise bei Gleitlagern der Fall ist. Derartige Gleitflächen können beispielsweise PTFE, Graphit oder Kupfer beinhalten.

In vorteilhafter Weise können die Gleitschuhe 30 aus Kunststoff bestehen, wodurch sie in einfacher Weise herstellbar sind, nämlich durch Spritzen.

Obwohl, wie vorerwähnt, durch den Einsatz von Gleitschuhen die Isolationseigenschaften bezüglich Torsionsschwingungen von Drehschwingungsdämpfern wesentlich verbessert werden konnte, sind zumindest bei einigen Anwendungsfällen im unteren Drehzahlbereich der Kraftfahrzeugantriebsmotoren noch Isolationsprobleme vorhanden, welche unter anderem auf die mit den bisherigen Reibschuhen noch auftretenden, zu hohen Reibmomente in Bezug auf die beim Komprimieren der Federn entstehende Rückstellkraft der Feder zurückzuführen sind. Durch Verwendung des erfindungsgemäßen Prinzips, das im Folgenden in Zusammenhang mit unterschiedlichen Ausführungsformen von Gleitschuhen näher erläutert wird, kann die vorerwähnte Reibung zwischen Gleitschuh und Abstützfläche reduziert werden.

Die Erfindung beruht darauf, dass die zwischen einem Gleitschuh 30 und der Abstützfläche 34 effektiv wirksame Abstütz- bzw. Kontaktfläche drehzahlabhängig verändert wird, wobei diese Veränderung vorzugsweise in Abhängigkeit der durch den zugeordneten Energiespeicher 7, wie insbesondere Schraubendruckfeder 8 und/oder 9 erzeugten Fliehkräfte, erfolgt. Die Veränderung der effektiv wirksamen Abstützfläche soll dabei vorzugsweise derart stattfinden, dass bei geringeren Drehzahlen des Drehschwingungsdämpfers eine verhältnismäßig kleine Kontakt- bzw. Abstützfläche zwischen einem Gleitschuh 30 und der diesen abstützenden Fläche 34 vorhanden ist, welche mit Zunahme der Motordrehzahl größer wird. Diese Vergrößerung kann dabei stufenweise erfolgen.

Die erfindungsgemäße Reduzierung des Reibeingriffes zwischen einem Gleitschuh 30 und der diesen radial abstützenden Fläche 34 beruht darauf, dass infolge der bei geringeren Drehzahlen vorhandenen, verhältnismäßig kleinen Kontaktfläche zwischen Reibschuh 30 und Fläche 34 eine erhöhte Flächenpressung erzielt werden kann, die eine Reduzierung der wirksamen Reibung zwischen einem Gleitschuh 30 und der Fläche 34 bewirkt.

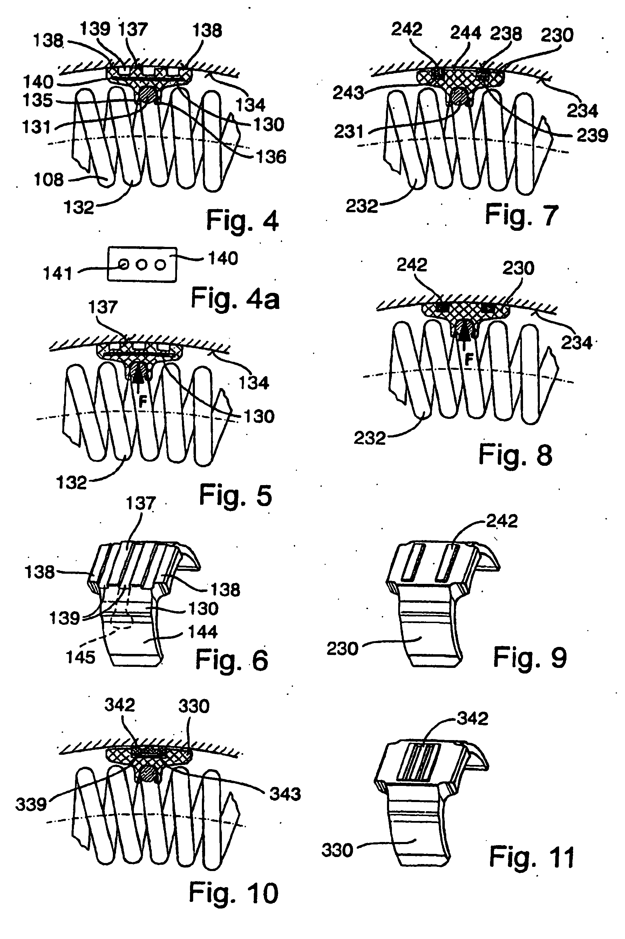

In den Figuren 4 bis 6 ist eine Ausführungsform eines Gleitschuhes 130 dargestellt, der radial nach innen vorstehende Bereiche 135, 136 besitzt, die hier durch nasen- bzw. hakenförmige Bereiche gebildet sind. Diese Bereiche 135, 136 umgreifen den radial äußeren Abschnitt 131 einer Schraubenfederwindung 132. Der dadurch gebildete Formschluss gewährleistet zumindest eine Positionierung bzw. Festlegung des Gleitschuhes 130 sowohl in Längsrichtung als auch in radialer Richtung der Feder 108. Bezüglich der möglichen Ausgestaltung eines derartigen Formschlusses wird auf die DE 102 09 838 A1 verwiesen.

Wie aus Figur 4 ersichtlich ist, besitzt die in Umfangsrichtung betrachtete Abstützfläche 137 des Gleitschuhes 130 einen größeren Krümmungsradius als die Fläche 134, entlang derer der Gleitschuh 130 verlagerbar ist. Die Biegesteifigkeit des Gleitschuhes 130 ist dabei derart bemessen, dass, wie aus Figur 4 ersichtlich, bei geringeren Drehzahlen des Drehschwingungsdämpfers die wirksame Kontaktfläche 138 zwischen dem Gleitschuh 130 und der Fläche 134 verhältnismäßig gering ist in Bezug auf die mögliche Gesamtabstützfläche 137 des Gleitschuhes 130. Bei dem dargestellten Ausführungsbeispiel stützt sich der Gleitschuh 130 bei geringeren Drehzahlen des Drehschwingungsdämpfers lediglich über seine, in Umfangsrichtung betrachtete, Endbereiche 138 an der Fläche 134 ab. Aus Figur 4 ist ersichtlich, dass zwischen den Endbereichen 838 die Abstützfläche 137 gegenüber der Fläche 134 beabstandet ist.

Wie insbesondere in Zusammenhang mit Figur 6 erkennbar ist, besitzt bei dem dargestellten Ausführungsbeispiel der Gleitschuh 130 keine durchgehend flächige Abstützfläche 137. Es ist erkennbar, dass durch Einbringung von Vertiefungen, die hier durch Nuten 139 gebildet sind, die Gesamtabstützfläche 137 in einzelne Teilflächen, zu denen auch die Kontaktbereiche 138 gehören, unterteilt ist. Die Einbringung von Vertiefungen 139 im Bereich der Gesamtabstützfläche 137 hat bei Verwendung von Schmiermittel den Vorteil, dass in diesen Vertiefungen Schmiermittel vorhanden ist, wodurch der Aufbau eines Schmierfilmes beim Entlanggleiten eines Schuhes 130 an der Fläche 134 positiv beeinflusst wird.

In Figur 5 ist der Verformungszustand bzw. Verspannungszustand des Gleitschuhes 130 dargestellt bei höheren Rotationsdrehzahlen. Es ist ersichtlich, dass aufgrund der durch die Feder 132 infolge von Fliehkrafteinwirkung auf den Gleitschuh 130 übertragene Radialkraft F dieser Gleitschuh 130 derart verbogen ist, dass die gesamte Abstützfläche 137 an der Gleitfläche 134 anliegt. Durch die Vergrößerung der wirksamen Abstützfläche 137 wird gewährleistet, dass die Flächenpressung auf ein akzeptables Maß begrenzt werden kann, wodurch auch der an den in Kontakt stehenden Reibflächen bzw. Abstützflächen auftretende Verschleiß reduziert werden kann. Bei dem dargestellten Ausführungsbeispiel gemäß den Figuren 4 bis 6 wird die zur Realisierung des erfindungsgemäßen Prinzips erforderliche elastische Verformbarkeit bzw. federnde Steifigkeit der hierfür notwendigen Funktionsbereiche eines Gleitschuhes 130 dadurch gewährleistet, dass in den aus einem Kunststoff bestehenden Gleitschuh 130 ein Federelement 140 eingespritzt bzw. eingebettet wird. In Figur 4a ist ein solches plättchenförmig ausgebildetes Federelement 140 dargestellt. Das hier im Wesentlichen rechteckförmig ausgebildete Federelement 140 hat Ausnehmungen 141 zur besseren Verankerung innerhalb des einen Gleitschuh 130 bildenden Kunststoffes.

Bei dem dargestellten Ausführungsbeispiel sind die Vertiefungen 139 in Querrichtung des Gleitschuhes 130 eingebracht. Derartige Vertiefungen könnten jedoch auch in Längsrichtung, also in Umfangsrichtung des Dämpfers betrachtet, in einen Gleitschuh 130 eingebracht werden. Auch schräg verlaufende Anordnungen von nutenförmigen Vertiefungen 139 sind möglich.

Bei der Ausführungsform gemäß den Figuren 7 bis 9 ist der Gleitschuh 230 in ähnlicher Weise wie dies in Zusammenhang mit den Figuren 4 bis 6 beschrieben wurde, auf den radial äußeren Bereichen 231 der Windung einer Feder 232 aufgenommen. Der Gleitschuh 230 besitzt Vertiefungen 239, in denen Gleit- bzw. Abstützelemente 242 aufgenommen sind. Die Abstützelemente 242 sind in den nutenartigen Vertiefungen 239 entgegen der Wirkung zumindest eines Energiespeichers 243 radial verlagerbar. Die Energiespeicher 243 können beispielsweise durch eine Wellfeder gebildet sein. Die radiale Verlagerbarkeit der Abstützelemente 242 innerhalb der nutenförmigen Aufnahmen 239 gewährleistet, dass diese in den Gleitschuh 230 entgegen der Wirkung des wenigstens einen Energiespeichers 243 eintauchen können. Die Federeigenschaften des wenigstens einen Energiespeichers 243 sind derart bemessen bzw. ausgelegt, dass, wie aus Figur 7 ersichtlich, bei geringeren Drehzahlen des Drehschwingungsdämpfers die Abstützelemente 242 gegenüber dem diese tragenden Gleitschuh 230 radial hervorstehen. Dadurch wird in ähnlicher Weise, wie dies bei Figur 4 der Fall ist, gewährleistet, dass bei geringeren Drehzahlen eine verhältnismäßig kleine, wirksame Abstützfläche des Gleitschuhes 230 an der Gleitfläche 234 anliegt. Die wirksame Abstützfläche ist dabei gebildet durch die Kontaktflächen 238 der Abstützelemente 242. Wie aus Figur 7 ersichtlich ist, besitzt der Grundkörper des Gleitschuhes 230 eine Gleit- bzw. Abstützfläche 244, die einen Krümmungsradius besitzt, der zumindest annähernd dem Krümmungsradius der Fläche 234 entspricht, an der sich der Gleitschuh 230 zumindest unter Fliehkrafteinwirkung abstützt.

In Zusammenhang mit Figur 8 ist erkennbar, dass bei höheren Drehzahlen infolge der durch die Feder 232 auf den Gleitschuh 230 ausgeübten radialen Fliehkraft F die Abstützelemente 242 entgegen der Wirkung der Federelemente 243 in dem Grundkörper des Gleitschuhes 230 eingetaucht sind, wodurch die Abstütz- bzw. Gleitfläche 244 des Grundkörpers des Gleitschuhes 230 an der Fläche 234 zur Anlage kommt. Dies gewährleistet, dass bei höheren Drehzahlen wiederum eine vergrößerte, wirksame Abstützfläche zwischen dem Gleitschuh 230 und der Fläche 234 vorhanden ist, so dass die vorhandene, spezifische Flächenpressung auf ein akzeptables Maß reduziert werden kann.

In vorteilhafter Weise sind die Abstützelemente 242 und die diese aufnehmenden Vertiefungen bzw. Nuten 239 derart ausgebildet, dass die Abstützelemente 242 am entsprechenden Gleitschuh 230 verliersicher gehaltert sind. Hierfür können diese Bauteile entsprechend ausgebildete Bereiche besitzen, die eine Verriegelung zum Beispiel mittels einer Schnappverbindung gewährleisten.

Der in den Figuren 10 und 11 dargestellte Gleitschuh 330 unterscheidet sich gegenüber dem Gleitschuh 230 gemäß den Figuren 7 bis 9 im Wesentlichen dadurch, dass ein plättchenförmiges Abstützelement 342 Verwendung findet, anstelle von zumindest zwei stäbchenförmigen Abstützelementen 242. Das Abstützelement 342 ist wiederum in einer Vertiefung bzw. Ausnehmung 339 radial verlagerbar aufgenommen. Bei dem dargestellten Ausführungsbeispiel ist der das plättchenförmige Abstützelement 342 gegenüber dem Grundkörper des Gleitschuhes 330 federnd abstützende Energiespeicher durch eine Tellerfeder 343 gebildet.

Um eine bessere elastische Verformung bzw. Verschwenkung der die Gesamtgleitfläche 137 eines Gleitschuhes 130 bildenden Bereiche zu gewährleisten, kann es zweckmäßig sein, wenn zumindest im Bereich der seitlichen Flügel 144, welche die entsprechende Schraubenfeder umgreifen, zumindest eine Durchgangsöffnung vorhanden ist. Diese Durchgangsöffnung, die eine schlitzförmige oder eine schlüssellochförmige oder eine andere Form aufweisen kann, soll eine Elastizität zumindest zwischen den Flügeln 144 und den die Gesamtgleitfläche 137 bildenden Bereichen eines Gleitschuhes 130 gewährleisten. In Figur 6 ist strichliert und mit dem Bezugszeichen 145 gekennzeichnet eine solche Ausnehmung kenntlich gemacht. Zweckmäßig kann es auch zusätzlich oder alternativ sein, wenn die die Gesamtgleitfläche 137 bildenden Abschnitte eines Gleitschuhes 130 wenigstens in zwei relativ zueinander verschwenkbare Teilbereiche unterteilt sind.

### Bezugszeichenliste

- 1: geteiltes Schwungrad
- 2: Primärschwungmasse
- 3: Schwungmasse
- 4: Lagerung
- 5: Bohrungen
- 6: Dämpfungseinrichtung
- 7: Energiespeicher
- 8: Schraubendruckfedern
- 9: Schraubendruckfedern
- 14: Beaufschlagungsbereiche
- 15: Beaufschlagungsbereich
- 16: Beaufschlagungsbereiche
- 17: Blechteile
- 18: Blechteile
- 19: Niete
- 20: Beaufschlagungsmittel
- 21: ringförmiger Raum
- 22: torusartiger Bereich
- 23: Ausbuchtungen
- 24: Ausbuchtungen
- 25: Verschleißschutz
- 26: Nabe
- 30: Gleitschuhe
- 31: Abschnitt
- 32: Windung
- 33: Wandung
- 34: radial abstützende Fläche
- 108: Feder
- 130: Gleitschuh
- 131: radial äußerer Abschnitt
- 132: Schraubenfederwindung
- 135: Bereiche
- 136: Bereiche
- 137: Abstützfläche
- 138: Endbereiche
- 139: Vertiefungen / Nuten
- 140: Federelement
- 141: Ausnehmungen
- 144: seitliche Flügel
- 145: Ausnehmung (strichliert)
- 230: Gleitschuh
- 231: radial äußere Bereiche
- 232: Feder
- 239: Vertiefungen
- 242: Abstützelemente
- 243: Energiespeicher
- 244: Abstütz- bzw. Gleitfläche
- 330: Gleitschuh
- 342: Abstützelement
- 343: Tellerfeder

## Patentansprüche

1. Drehschwingungsdämpfer mit wenigstens zwei um eine Drehachse verdrehbaren Teilen, die relativ zueinander entgegen der Wirkung wenigstens einer Schraubenfeder drehbeweglich sind, wobei die Schraubenfeder in einer bogenförmig verlaufenden Aufnahme geführt ist, die von Bereichen wenigstens eines der beiden Teile gebildet ist, weiterhin die Aufnahme durch wenigstens einen Wandungsbereich begrenzt ist, der zumindest radial äußere Bereiche der Schraubenfeder axial übergreift und sich zumindest über die Länge der Schraubenfeder in Umfangsrichtung des Drehschwingungsdämpfers erstreckt, wobei die Schraubenfeder radial nach außen hin über wenigstens einen Gleitschuh abstützbar ist, der zumindest entlang des Wandungsbereiches bewegbar ist, wobei wenigstens eine Windung der Schraubenfeder vom Gleitschuh zumindest radial abgestützt ist, wobei die an dem Wandungsbereich anliegende Abstützfläche des Gleitschuhes in Abhängigkeit der auf die Schraubenfeder einwirkenden Fliehkraft veränderbar ist, wobei die die Abstützfläche bildenden Bereiche des Gleitschuhes zumindest bei nicht fliehkraftmäßig beanspruchtern Gleitschuh einen vom Krümmungsverlauf des Wandungsbereiches abweichenden Krümmungsverlauf besitzen, wobei die Abstützfläche des Gleitschuhes einen größeren Krümmungsradius als der Wandungsbereich aufweist.

2. Drehschwingungsdämpfer nach Anspruch 1, **dadurch gekennzeichnet, dass** die Abstützfläche des Gleitschuhes mit zunehmender Drehzahl zumindest stufenweise größer wird.

3. Drehschwingungsdämpfer nach einem der Ansprüche 1 bis 2, **dadurch gekennzeichnet, dass** der Gleitschuh mehrteilig ausgeführt ist und zwischen wenigstens zwei Teilen zumindest ein Federelement vorhanden ist, entgegen dessen Wirkung eine Relativbewegung dieser Teile zumindest unter Fliehkrafteinwirkung ermöglicht ist.

4. Drehschwingungsdämpfer nach einem der Ansprüche 1 bis 3, **dadurch gekennzeichnet, dass** im Bereich der Abstützfläche des Gleitschuhes Ausnehmungen vorhanden sind, in denen Abstützelemente aufgenommen sind.

5. Drehschwingungsdämpfer nach Anspruch 4, **dadurch gekennzeichnet, dass** die Abstützelemente entgegen der Wirkung eines Federelementes in die Ausnehmungen drängbar sind.

6. Drehschwingungsdämpfer nach Anspruch 4 oder 5, **dadurch gekennzeichnet, dass** zumindest im nicht beanspruchten Zustand die Abstützelemente gegenüber der Abstützfläche des Gleitschuhes - in Bezug auf die Drehachse des Drehschwingungsdämpfers betrachtet - radial hervorstehen.

7. Drehschwingungsdämpfer nach einem der Ansprüche 4 bis 6, **dadurch gekennzeichnet, dass** die Abstützelemente am Gleitschuh verliergesichert sind.

8. Drehschwingungsdämpfer nach Anspruch 7, **dadurch gekennzeichnet, dass** die Verliersicherung durch einen Formschluss, wie zum Beispiel einen Schnappverschluss, gebildet ist.

9. Drehschwingungsdämpfer nach einem der Anspruche 1 bis 8, **dadurch gekennzeichnet, dass** die auf die Feder einwirkende Fliehkraft den Gleitschuh derart verformt, dass sich dessen Krümmungsradius an den Krümmungsradius des Wandungsbereiches zumindest annähert.

10. Drehschwingungsdämpfer nach einem der Ansprüche 4 bis 9, **dadurch gekennzeichnet, dass** die Abstützelemente aus einem Werkstoff bestehen, der einen geringeren Reibungskoeffizienten aufweist als der den Grundkörper des Gleitschuhes bildende Werkstoff.

11. Drehschwingungsdämpfer nach einem der Ansprüche 4 bis 10, **dadurch gekennzeichnet, dass** die im Grundkörper des Gleitschuhes aufgenommenen Abstützelemente einen Selbstschmierungseffekt aufweisen.

12. Drehschwingungsdämpfer nach einem der Ansprüche 1 bis 11, **dadurch gekennzeichnet, dass** der Gleitschuh zumindest einen Bereich besitzt, der wenigstens einen radial äußeren Abschnitt einer Schraubenfederwindung zumindest teilweise umgreift, wodurch der Gleitschuh in Längsrichtung der Schraubenfeder gegenüber Letzterer festgelegt ist.

13. Drehschwingungsdämpfer nach einem der Ansprüche 1 bis 12, **dadurch gekennzeichnet, dass** zwischen dem Gleitschuh und der Schraubenfederwindung eine Verbindung vorhanden ist, die eine Halterung des Gleitschuhes gegenüber der Schraubenfeder in eine Richtung senkrecht zur Längsachse der Schraubenfeder bewirkt.

14. Drehschwingungsdämpfer nach Anspruch 1 bis 13, **dadurch gekennzeichnet, dass** im Grundkörper des Gleitschuhes ein plattenförmiges Federelement eingebettet ist, welches den Krümmungsradius der Abstützfläche des nicht fliehkraftmäßig beanspruchten Gleitschuhes bestimmt.

## Claims

1. A torsional vibration damper having at least two parts that can be twisted around an axis of rotation, which are rotationally movable relative to each other against the force of at least one coil spring, the coil spring being guided in an arched receptacle which is formed of areas of at least one of the two parts, the receptacle furthermore being bounded by at least one area of wall which axially overlaps at least radially outer areas of the coil spring and extends at least over the length of the coil spring in the circumferential direction of the torsional vibration damper, the coil spring being supportable radially toward the outside by means of at least one sliding block which is movable at least along the area of wall, at least one coil of the coil spring being supported at least radially by the sliding block, the support surface of the sliding block that bears against the wall area being changeable depending on the centrifugal force acting on the coil spring, the areas of the sliding block that form the support surface having a contour of curvature that differs from the contour of curvature of the wall area, at least when the sliding block is not subjected to centrifugal force, the support surface of the sliding block having a larger radius of curvature than the wall area.

2. The torsional vibration damper according to Claim 1, **characterized in that** the support surface of the sliding block becomes larger at least by steps as the speed of rotation increases.

3. The torsional vibration damper according to one of Claims 1 through 2, **characterized in that** the sliding block is made in multiple parts, and between at least two parts there is at least one spring element, against whose action a relative motion of these parts is made possible at least under the effect of centrifugal force.

4. The torsional vibration damper according to one of Claims 1 through 3, **characterized in that** there are recesses in the area of the support surface of the sliding block, in which support elements are accommodated.

5. The torsional vibration damper according to Claim 4, **characterized in that** the support elements can be pushed into the recesses, against the action of a spring element.

6. The torsional vibration damper according to Claim 4 or 5, **characterized in that** at least in the non-loaded state the support elements protrude radially with respect to the support surface of the sliding block - viewed in reference to the axis of rotation of the torsional vibration damper.

7. The torsional vibration damper according to one of Claims 4 through 6, **characterized in that** the support elements are secured against loosening on the sliding block.

8. The torsional vibration damper according to Claim 7, **characterized in that** the protection against loosening is formed by a form closure, such as a snap lock for example.

9. The torsional vibration damper according to one of Claims 1 through 8, **characterized in that** the centrifugal force acting on the spring distorts the sliding block so that its radius of curvature at least approaches the radius of curvature of the wall area.

10. The torsional vibration damper according to one of Claims 4 through 9, **characterized in that** the support elements are made of a material that has a lower coefficient of friction than the material that forms the body of the sliding block.

11. The torsional vibration damper according to one of Claims 4 through 10, **characterized in that** the support elements accommodated in the body of the sliding block have a self-lubricating effect.

12. The torsional vibration damper according to one of Claims 1 through 11, **characterized in that** the sliding block has at least one area that at least partially encompasses at least one radially outer section of a turn of the coil spring, whereby the sliding block is fixed with respect to the coil spring in the longitudinal direction of the latter.

13. The torsional vibration damper according to one of Claims 1 through 12, **characterized in that** there is a connection between the sliding block and the coil of the coil spring, which brings about a fixing of the sliding block with respect to the coil spring in a direction perpendicular to the longitudinal axis of the coil spring.

14. The torsional vibration damper according to Claims 1 through 13, **characterized in that** a plate-like spring element is embedded in the body of the sliding block, which determines the radius of curvature of the support surface of the sliding block when the latter is not subjected to centrifugal force.

## Revendications

1. Amortisseur de vibrations torsionnelles avec au moins deux éléments rotatifs autour d'un axe de rotation, qui l'un par rapport à l'autre sont mobiles en rotation contre l'action d'un ressort cylindrique, le ressort cylindrique étant guidé dans un logement s'étendant en forme d'arc qui est formé par des zones d'au moins l'un des deux éléments, par ailleurs, le logement étant délimité par au moins une zone de paroi, qui chevauche en direction axiale au moins des zones extérieures radiales de la vis cylindrique et qui s'étend au moins sur la longueur de la vis cylindrique, en direction périphérique de l'amortisseur de vibrations torsionnelles, la vis cylindrique étant susceptible de s'appuyer en direction radiale vers l'extérieur par l'intermédiaire d'au moins un patin de guidage, qui est mobile au moins le long de la zone de paroi, au moins une spire de la vis cylindrique s'appuyant au moins en direction radiale, la surface d'appui du patin de guidage appliquée sur la zone de paroi étant modifiable en fonction de la force centrifuge agissant sur le ressort cylindrique, au moins lorsque le patin de guidage n'est pas contraint par une force centrifuge, les zones du patin de guidage formant la surface d'appui présentant un trajet de courbure qui est différent du trajet de courbure de la zone de paroi, la surface d'appui du patin de guidage présentant un angle de courbure plus grand que la zone de paroi.

2. Amortisseur de vibrations torsionnelles selon la revendication 1, **caractérisé en ce que** la surface d'appui du patin de guidage s'agrandit au moins par paliers au fur et à mesure de la montée en régime.

3. Amortisseur de vibrations torsionnelles selon l'une quelconque des revendications 1 à 2, **caractérisé en ce que** le patin de guidage est réalisé en plusieurs éléments, et par la présence entre au moins deux éléments, d'au moins un élément à ressort, contre l'action duquel un déplacement relatif de ces éléments est rendu possible sous l'effet d'une force centrifuge.

4. Amortisseur de vibrations torsionnelles selon l'une quelconque des revendications 1 à 3, **caractérisé en ce que**, dans la zone de la surface d'appui du patin de guidage, des évidements sont présents, dans lesquels des éléments d'appui sont logés.

5. Amortisseur de vibrations torsionnelles selon la revendication 4, **caractérisé en ce que** les éléments d'appui sont susceptibles d'être contraints dans les évidements contre l'action d'un élément à ressort.

6. Amortisseur de vibrations torsionnelles selon l'une quelconque des revendications 4 ou 5, **caractérisé en ce que**, (considérés par rapport à l'axe de rotation de l'amortisseur de vibrations torsionnelles), au moins à l'état non contraint, les éléments d'appui débordent en direction radiale par rapport à la surface d'appui du patin de guidage.

7. Amortisseur de vibrations torsionnelles selon l'une quelconque des revendications 4 à 6, **caractérisé en ce que** les éléments d'appui sont garantis contre la perte sur le patin de guidage.

8. Amortisseur de vibrations torsionnelles selon la revendication 7, **caractérisé en ce que** la sécurité contre la perte est réalisée par une complémentarité de forme, comme par exemple un assemblage à encliquetage.

9. Amortisseur de vibrations torsionnelles selon l'une quelconque des revendications 1 à 8, **caractérisé en ce que** la force centrifuge agissant sur le ressort déforme le patin de guidage, de sorte que son angle de courbure se rapproche au moins de l'angle de courbure de la zone de paroi.

10. Amortisseur de vibrations torsionnelles selon l'une quelconque des revendications 4 à 9, **caractérisé en ce que** les éléments d'appui sont en un matériau faisant preuve d'un coefficient de frottement inférieur à celui du matériau formant le corps de base du patin de guidage.

11. Amortisseur de vibrations torsionnelles selon l'une quelconque des revendications 4 à 10, **caractérisé en ce que** les éléments d'appui logés dans le corps de base du patin de guidage ont un effet autolubrifiant.

12. Amortisseur de vibrations torsionnelles selon l'une quelconque des revendications 1 à 11, **caractérisé en ce que** le patin de guidage comporte au moins une zone qui entoure au moins partiellement une section radiale extérieure d'une spire de ressort cylindrique, ce qui a pour effet de fixer le patin de guidage en direction longitudinale du ressort cylindrique par rapport à ce dernier.

13. Amortisseur de vibrations torsionnelles selon l'une quelconque des revendications 1 à 12, **caractérisé en ce que**, entre le patin de guidage et la spire du ressort cylindrique se trouve un assemblage qui assure une fixation du patin de guidage par rapport au ressort cylindrique, dans une direction à la verticale de l'axe longitudinal du ressort cylindrique.

14. Amortisseur de vibrations torsionnelles selon l'une quelconque des revendications 1 à 13, **caractérisé en ce que**, dans le corps de base du patin de guidage est noyé un élément à ressort en forme de plaque, qui détermine le rayon de courbure de la surface d'appui du patin de guidage qui n'est pas contraint par une force centrifuge.
